# EUROPEAN PATENT SPECIFICATION

(11) **EP 2 746 121 B1**
(45) Date of publication and mention of the grant of the patent: **12.02.2020**
(21) Application number: 13197721.7
(22) Date of filing: 17.12.2013
(51) Int. Cl.: B60T 7/10, B60R 25/08

(54) **Handbrake locking device**
Handbremsverriegelungsvorrichtung
Dispositif de verrouillage de frein à main

(30) Priority: 20.12.2012 GB 201223016
(43) Date of publication of application: 25.06.2014
(73) Proprietor: Nissan Motor Manufacturing (UK) Ltd., Cranfield Bedfordshire MK43 0DB (GB)
(72) Inventor: Hobbs, Dave, Cranfield, Bedfordshire MK430DB (GB)

(56) References cited:
- WO-A1-2004/056629
- DE-U1- 20 105 666
- US-A- 5 896 766
- US-A1- 2006 213 313

## Description

### Technical field of the invention

This invention relates to a handbrake locking device, to a vehicle comprising a handbrake locking device, and to a method for preventing and enabling operation of a vehicle handbrake.

### Background to the invention

A common type of vehicle handbrake consists of a handbrake lever or shaft, through which runs a sprung, button-actuated pawl connecting rod, connected at one end to a pawl and ratchet mechanism which is in turn connected to a wheel locking system, or in some cases a drive shaft or transmission locking system. To release the brake, a driver will press a button at the end of the handbrake lever, in order to release the pawl from the ratchet. This enables downward rotation of the handbrake lever, and subsequent release of the wheel, drive shaft or transmission locking system. To operate the handbrake to prevent movement of the vehicle, the driver presses the release button and pulls the handbrake lever, rotating it in an upward direction. This actuates the wheel, transmission or drive shaft locking system, and at the same time operatively connects the pawl to the ratchet, so that when the driver takes his/her hand off the handbrake lever, it remains in a raised position; and the wheels remain locked.

It is known to use a vehicle's handbrake as an anti-theft device, rendering the vehicle immobile to any would-be thief. There are various known ways of using the vehicle handbrake as an anti-theft device, ranging from the use of a separate locking collar arranged to be connected around the handbrake lever, and/or connected to another component of the vehicle, in order to prevent movement of the handbrake; to complicated mechanisms located within the handbrake lever, which prevent movement of the spring loaded pawl rod within the handbrake lever and/or prevent disconnection of the pawl from the ratchet, until an authorised user has deactivated the device in the appropriate manner. In use, an authorised user will activate the anti-theft device connected to the handbrake when it is intended to immobilise the vehicle, and deactivate the device when it is intended to use the vehicle.

US5,896,766 discloses a handbrake locking device according to the preamble of claim 1.

There are problems associated with the known prior art handbrake anti-theft devices. In the case of locking collars or other devices intended to be connected to the handbrake, and locked to another component on the vehicle, it is possible for a would-be thief to use tools, or brute force, in order to dismantle the collars or devices. In some cases, such devices have standard locks into which an authorised user would insert a key, and a would-be thief is able to force the lock and/or use lock picks in order to disconnect the device. Furthermore, such devices tend to be bulky and expensive, and in many cases the authorised user forgets to connect the device before leaving the vehicle. It is therefore an aim of embodiments of the invention to overcome or mitigate at least one problem of the prior art.

### Summary of the invention

According to a first aspect of the invention, there is provided a handbrake locking device comprising a locking bar arranged in use to be located beneath the lever of a handbrake, the locking bar being rotatable between a handbrake release enablement position in which the handbrake can be operated, and a handbrake release prevention position in which the handbrake lever is prevented from being lowered to release the handbrake; characterized in that the locking bar is oriented parallel to the axis of the handbrake lever in the handbrake release enablement position, and rotated such that at least a portion of the locking bar extends directly beneath the handbrake lever in the handbrake release prevention position.

The locking device may comprise a motor to which the locking bar is connected at one end, and which may be operated to effect rotational movement of the locking bar. The motor may be a stepper motor, which may have at least one position in which the locking bar enables release of the handbrake, in use, and at least one position which prevents release of the handbrake in use.

The locking device may comprise a locking bar support or housing, into which an end of the locking bar may rotate in the handbrake release prevention position. The support is adapted to prevent or reduce the likelihood of the locking bar being forced out of the handbrake release prevention position. The support may comprise a terminal wall past which the locking bar cannot rotate. The support may also comprise a detent arranged to increase the load required to release the locking bar manually.

According to a second aspect of the invention, there is provided a vehicle comprising a handbrake having a handbrake lever and a handbrake locking device of the first aspect of the invention, located beneath the handbrake lever in the handbrake release prevention position.

The vehicle may further comprise a central locking system; and the handbrake locking device may be part of the vehicle central locking system.

Operation of the handbrake locking device may be effected when the vehicle doors are centrally locked or unlocked.

The handbrake locking device may be actuated to move to the handbrake release prevention position upon the handbrake lever being raised to the "brake actuated" position and the vehicle engine being turned off.

The handbrake may be any conventional handbrake having an elongate lever connected to a pawl and ratchet operating mechanism.

In use, the handbrake lever is raised to lock wheels or a driveshaft of the vehicle, and thus to prevent movement of the vehicle. The handbrake is then lowered to unlock the wheels or driveshaft, and thus to enable movement of the vehicle.

In the second aspect of the invention, the locking bar may be located adjacent to the handbrake lever, and be rotated between the handbrake release prevention position and the handbrake release enablement position in use.

The handbrake locking device may further comprise a locking bar support located adjacent to the handbrake lever, on the opposite side of the lever axis to the locking bar, and wherein the distal end of the locking bar is secured within the locking bar support when the locking bar is in the handbrake release prevention position.

The locking bar may be located adjacent to one side of the lever axis, and be oriented parallel to the lever axis in the handbrake release enablement position. In this position, the locking bar is not located directly beneath the lever. When it is desired to prevent release of the handbrake, the locking bar is rotated such that at least a portion of the bar extends directly beneath the handbrake lever. In this position, release of the handbrake is prevented as the locking bar prevents downward movement of the lever.

The locking bar support may be located on the opposite side of the lever axis to the locking bar. In this way, the locking bar may rotate from the handbrake release enablement position to the handbrake release prevention position, and the distal end of the locking bar may enter the support and be secured therein. The support is placed and oriented so that it is difficult for an unauthorised person to attempt to force rotation of the locking bar from the handbrake release prevention position.

The locking device may include electronic means for remote operation of the device. For example, the locking bar may be operated through means located on the vehicle key or access card, and may be part of the vehicle central locking system; so that operation of the locking device is effected when the vehicle doors are centrally locked or unlocked. Alternatively, the locking device may be activated on ignition of the engine, to rotate from the handbrake release prevention position; and may be actuated to move to the handbrake release prevention position upon the handbrake lever being raised to the "brake actuated" position and the vehicle engine being turned off. In this context, the term "vehicle engine" should be taken to include other forms of motive power, such as an electric vehicle traction motor.

According to a third aspect of the invention, there is provided a method of enabling or preventing operation of a vehicle handbrake, the method comprising the steps of :
a) providing a locking device of the first aspect of the invention, located beneath the handbrake lever in use; and
b) rotating the locking bar of the locking device between a handbrake release prevention position and a handbrake release enablement position, to prevent or allow lowering of the handbrake lever;
characterized in that:
the locking bar (14) is oriented parallel to the axis (H-H) of the handbrake lever (4) in the handbrake release enablement position (14F), and is rotated such that at least a portion of the locking bar (14) extends directly beneath the handbrake lever (4) in the handbrake release prevention position (14L).

The locking device may comprise a locking bar and a locking bar support, as described hereinabove and located beneath and on respective opposite sides of the longitudinal axis of the handbrake lever. The locking bar may be rotated from the handbrake release enablement position in which it does not lie directly beneath the lever, to the handbrake release prevention position, in which at least a portion of the locking bar lies directly beneath the lever, thereby preventing downward movement of the lever. The distal end of the locking bar may be secured in the locking bar support when the locking bar is in the handbrake release prevention position. The vehicle may be as described for the second aspect of the invention; particularly in that vehicle further comprises a central locking system, and the handbrake locking device (12) is part of the vehicle central locking system.

### Detailed description of the invention

In order that the invention may be more clearly understood, an embodiment thereof will now be described, by way of example only, with reference to the accompanying drawings of which:
Figure 1 illustrates a handbrake locking device of the first aspect of the invention located beneath a vehicle handbrake lever in a handbrake release prevention position;
Figure 2 illustrates a top down view of the handbrake locking device shown in Figure 1, in a first, handbrake release enabling position;
Figure 3 illustrates a top down view of the handbrake locking device shown in Figure 1 in the handbrake release prevention position; and
Figure 4 is a detail view of the locking bar support along arrow IV in Figure 2.

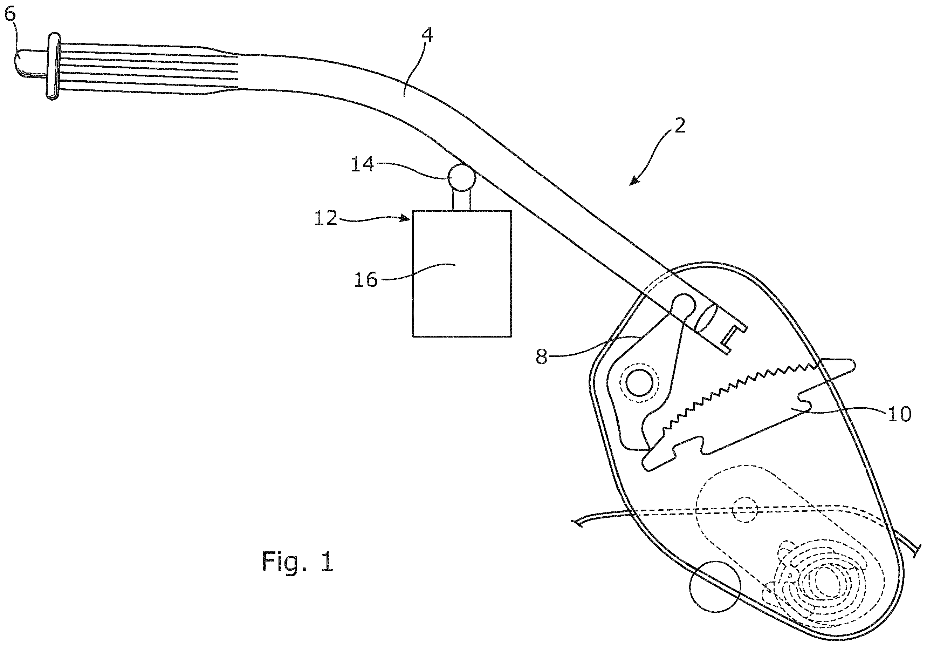

Figure 1 illustrates a handbrake lever assembly (2), underneath which is located an embodiment of a handbrake locking device (12) of the invention. The handbrake (2) includes a lever (4), and a handbrake release button (6) which is connected via an internal pawl connecting rod (not shown) to a pawl (8). The pawl (8) is operatively connected to a ratchet (10), and the handbrake lever assembly (2) is operatively connected to a vehicle's brakes. The rear end of the lever (4) is normally covered by a shroud (not shown).

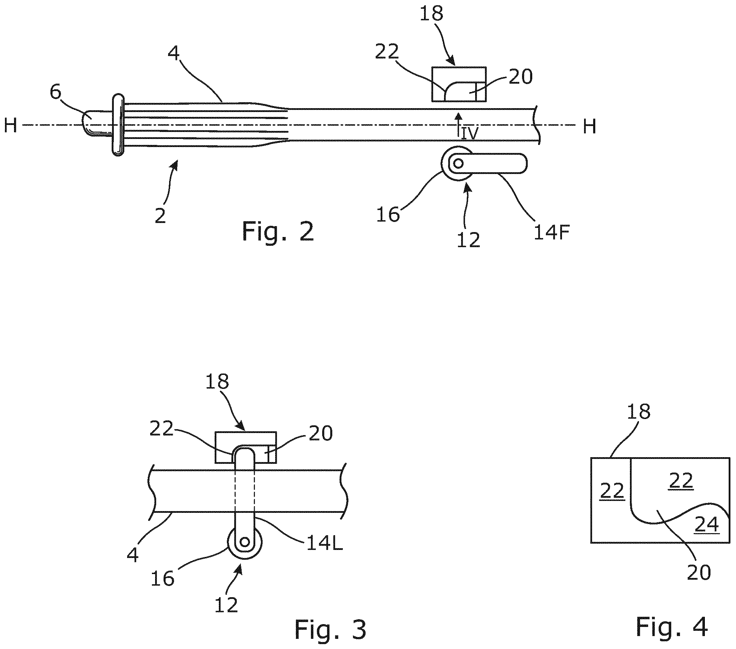

As shown in Figures 1-3 the locking device (12) comprises a locking bar (14), rotatably connected to a stepper motor (16). As shown in Figure 2, the stepper motor and proximal end of the locking bar (14) connected to the stepper motor (16) are located adjacent to one side of the linear axis H-H of the lever (4). Adjacent and on the other side of the linear axis of lever (4) is a locking bar support (18) which includes a support recess (20), surrounded by a terminal wall (22). A detent (24, Fig. 4) is also provided to discourage accidental or unauthorized release of the lock. Locking bar 14 will ride over this detent as the lock is applied and released.

The locking bar (14) is rotatable about its proximal end connected to the stepper motor (16), between a first, handbrake release enablement position as shown in Figure 2, to a second, handbrake release prevention position as shown in Figure 3. Rotation is effected by the stepper motor 16, which includes predetermined start and end positions corresponding to the locking bar handbrake release enablement and prevention positions.

Use of the locking device (12) will now be described with reference to each of Figures 1-3. As shown in Figures 1 and 3, when the handbrake (2) is in a brake locking configuration, in which the lever (4) is raised, the locking bar (14) of the locking device (12) is in the handbrake release prevention position (14L). In this position, the distal end of the locking bar (14) is located in the recess (20) of the locking bar support (18). The locking bar support (18) includes a terminal wall (22), past which the locking bar (14) cannot rotate, and which also serves to hinder forced rotation of the locking bar (14) by an unauthorised person.

When the handbrake (2) is in the brake locking configuration as shown in Figures 1 and 3, and when the engine ignition is turned off, the locking bar (14) is in the handbrake release prevention position (14L).

In order to enable release of the handbrake (2), the authorised vehicle driver turns on the vehicle ignition, which sends a signal to the stepper motor (16) to rotate the locking bar (14) from the handbrake release prevention position (14L) shown in Figure 3 to the handbrake release enablement position (14F) shown in Figure 2. During this process, the locking bar (14) is rotated by the stepper motor (16) away from the recess (20) of the locking bar support (18) over the detent (24), to lie parallel with the axis of the lever (4), as shown in Figure 2. In this position, the locking bar (14) does not lie beneath the lever (4), and thus does not prevent the lever (4) from being lowered to release the brakes of the vehicle.

When it is desired to park and exit the vehicle, the vehicle driver will raise the handbrake lever back to the brake locking position shown in Figure 1. When the engine ignition is turned off, a signal is sent to the stepper motor (16) to rotate the locking bar (14) back to the handbrake release prevention position (14L) shown in Figure 3.

In some embodiments, the locking device of the invention and/or stepper motor of the embodiment described hereinabove may have electronic means incorporated therein which enable operation of the device remotely via buttons located on the vehicle dashboard, vehicle access card, vehicle key, or other remote control means. In this way, a vehicle driver may use the vehicle normally, and operate the handbrake normally, then when leaving the vehicle the locking device may be activated by remote control. In some embodiments, the remote control may centrally lock the vehicle doors, as well as activating the handbrake locking device to move the locking bar to the handbrake release prevention position. Conversely, when a vehicle driver unlocks the vehicle doors via a central locking remote control device, the handbrake locking device may actuate such that the locking bar moves to the handbrake release enablement position.

## Claims

1. A handbrake locking device (12) comprising a locking bar (14) arranged in use to be located beneath the lever (4) of a handbrake, the locking bar being rotatable between a handbrake release enablement position (14F) in which the handbrake can be operated, and a handbrake release prevention position (14L) in which the handbrake is prevented from being released, in use;
**characterized in that**:
the locking bar (14) is oriented parallel to the axis (H-H) of the handbrake lever (4) in the handbrake release enablement position (14F), and is rotated such that at least a portion of the locking bar (14) extends directly beneath the handbrake lever (4) in the handbrake release prevention position (14L).

2. A handbrake locking device (12) as claimed in claim 1, comprising a motor (16) to which the locking bar (14) is connected at one end, and which is operated to effect rotational movement of the locking bar.

3. A handbrake locking device (12) as claimed in claim 2, wherein the motor (16) is a stepper motor.

4. A handbrake locking device (12) as claimed in any one of claims 1 to 3, comprising a locking bar housing (18), into which the locking bar (14) rotates in the handbrake release prevention position (14L).

5. A handbrake locking device (12) as claimed in claim 4, wherein the locking bar housing (18) comprises a terminal wall (22).

6. A handbrake locking device (12) as claimed in claim 4 or claim 5, wherein the locking bar housing (18) comprises a detent (24).

7. A vehicle comprising a handbrake having a handbrake lever (4), and a handbrake locking device (12) of any one of claims 1 to 6, located beneath the handbrake lever in the handbrake release prevention position (14L).

8. A vehicle as claimed in claim 7, wherein the vehicle further comprises a central locking system, and the handbrake locking device (12) is part of the vehicle central locking system.

9. A vehicle as claimed in claim 8, wherein operation of the handbrake locking device (12) is effected when the vehicle doors are centrally locked or unlocked.

10. A vehicle as claimed in claim 7, wherein the handbrake locking device (12) is actuated to move to the handbrake release prevention position (14L) upon the handbrake lever (4) being raised to the "brake actuated" position and the vehicle engine being turned off.

11. A vehicle as claimed in any one of claims 7 to 10, wherein the locking bar (14) is located adjacent and to one side of the handbrake lever (4), and is rotated between the handbrake release prevention position (14L) and the handbrake release enablement position (14F) in use.

12. A vehicle as claimed in any one of claims 7 to 11, wherein the handbrake locking device (12) further comprises a locking bar support (18) located adjacent to the handbrake lever (4), on the opposite side of the lever axis (H-H) to the locking bar (14F), and wherein the distal end of the locking bar (14) is secured within the locking bar support (18) when the locking bar is in the handbrake release prevention position (14L).

13. A method of enabling or preventing operation of a vehicle handbrake, the method comprising the steps of:
a) providing a locking device (12) of any one of claims 1 to 6 located beneath the handbrake lever (4) in use; and
b) rotating the locking bar (14) of the locking device between a handbrake release prevention position (14L) and a handbrake release enablement position (14F), to prevent or allow release of the handbrake;
**characterized in that**:
the locking bar (14) is oriented parallel to the axis (H-H) of the handbrake lever (4) in the handbrake release enablement position (14F), and is rotated such that at least a portion of the locking bar (14) extends directly beneath the handbrake lever (4) in the handbrake release prevention position (14L).

14. A method as claimed in claim 13, wherein the vehicle further comprises a central locking system, and the handbrake locking device (12) is part of the vehicle central locking system.

## Patentansprüche

1. Feststellvorrichtung für eine Handbremse (12) mit einer Verriegelungsstange (14), die im Betrieb so angeordnet ist, dass sie unter dem Hebel (4) einer Handbremse angeordnet ist, wobei die Verriegelungsstange zwischen einer Position zum Lösen der Handbremse (14F), in der die Handbremse betätigt werden kann, und einer Position zur Verhinderung des Lösens der Handbremse (14L), in der das Lösen der Handbremse im Betrieb verhindert wird, drehbar ist;
**dadurch gekennzeichnet, dass**:
die Verriegelungsstange (14) in der Position zum Lösen der Handbremse (14F) parallel zur Achse (H-H) des Handbremshebels (4) ausgerichtet ist und so gedreht wird, dass sich mindestens ein Teil der Verriegelungsstange (14) direkt unterhalb des Handbremshebels (4) in der Position zur Verhinderung des Lösens der Handbremse (14L) erstreckt.

2. Feststellvorrichtung für eine Handbremse (12) nach Anspruch 1, mit einem Motor (16), mit dem die Verriegelungsstange (14) an einem Ende verbunden ist, und der betätigt wird, um eine Drehbewegung der Verriegelungsstange zu bewirken.

3. Feststellvorrichtung für eine Handbremse (12) nach Anspruch 2, wobei der Motor (16) ein Schrittmotor ist.

4. Feststellvorrichtung für eine Handbremse (12) nach einem der Ansprüche 1 bis 3 mit einem Verriegelungsstangengehäuse (18), in das sich die Verriegelungsstange (14) in der Position zur Verhinderung des Lösens der Handbremse (14L) hineindreht.

5. Feststellvorrichtung für eine Handbremse (12) nach Anspruch 4, wobei das Verriegelungsstangengehäuse (18) eine Anschlusswand (22) umfasst.

6. Feststellvorrichtung für eine Handbremse (12) nach Anspruch 4 oder Anspruch 5, wobei das Verriegelungsstangengehäuse (18) eine Raste (24) umfasst.

7. Fahrzeug mit einer Handbremse mit einem Handbremshebel (4) und einer Feststellvorrichtung für eine Handbremse (12) nach einem der Ansprüche 1 bis 6, die sich unterhalb des Handbremshebels in der Position zur Verhinderung des Lösens der Handbremse (14L) befindet.

8. Fahrzeug nach Anspruch 7, wobei das Fahrzeug ferner ein Zentralverriegelungssystem umfasst und die Feststellvorrichtung für eine Handbremse (12) Teil des Zentralverriegelungssystems des Fahrzeugs ist.

9. Fahrzeug nach Anspruch 8, wobei die Betätigung der Feststellvorrichtung für eine Handbremse (12) bewirkt wird, wenn die Fahrzeugtüren zentral verriegelt oder entriegelt werden.

10. Fahrzeug nach Anspruch 7, wobei die Feststellvorrichtung für eine Handbremse (12) betätigt wird, um in die Position zur Verhinderung des Lösens der Handbremse (14L) zu gehen, wenn der Handbremshebel (4) in die Position "Bremse betätigt" angezogen und der Fahrzeugmotor abgestellt wird.

11. Fahrzeug nach einem der Ansprüche 7 bis 10, wobei die Verriegelungsstange (14) neben dem und auf einer Seite des Handbremshebels (4) angeordnet ist, und zwischen der Position zur Verhinderung des Lösens der Handbremse (14L) und der Position zum Lösen der Handbremse (14F) im Gebrauch gedreht wird.

12. Fahrzeug nach einem der Ansprüche 7 bis 11, wobei die Feststellvorrichtung für eine Handbremse (12) weiterhin eine Verriegelungsstangenhalterung (18) umfasst, die sich neben dem Handbremshebel (4) auf der gegenüberliegenden Seite der Hebelachse (H-H) zur Verriegelungsstange (14F) befindet, und wobei das distale Ende der Verriegelungsstange (14) in der Verriegelungsstangenhalterung (18) gesichert ist, wenn sich die Verriegelungsstange in der Position zur Verhinderung des Lösens der Handbremse (14L) befindet.

13. Verfahren zum Ermöglichen oder Verhindern des Betriebs einer Fahrzeughandbremse, wobei das Verfahren die folgenden Schritte umfasst:
a) Bereitstellen einer Feststellvorrichtung (12) nach einem der Ansprüche 1 bis 6, die sich im Gebrauch unterhalb des Handbremshebels (4) befindet; und
b) Drehen der Verriegelungsstange (14) der Feststellvorrichtung zwischen einer Position zur Verhinderung des Lösens der Handbremse (14L) und einer Position zum Lösen der Handbremse (14F), um ein Lösen der Handbremse zu verhindern oder zu ermöglichen;
**dadurch gekennzeichnet, dass**:
die Verriegelungsstange (14) in der Position zum Lösen der Handbremse (14F) parallel zur Achse (H-H) des Handbremshebels (4) ausgerichtet ist und so gedreht wird, dass sich mindestens ein Teil der Verriegelungsstange (14) direkt unterhalb des Handbremshebels (4) in der Position zur Verhinderung des Lösens der Handbremse (14L) erstreckt.

14. Verfahren nach Anspruch 13, wobei das Fahrzeug ferner ein Zentralverriegelungssystem umfasst und die Feststellvorrichtung für eine Handbremse (12) Teil des Zentralverriegelungssystems des Fahrzeugs ist.

## Revendications

1. Dispositif de verrouillage de frein à main (12) comprenant une barre de verrouillage (14) agencée pour se trouver en utilisation sous le levier (4) d'un frein à main, la barre de verrouillage pouvant tourner entre une position d'activation de desserrage du frein à main (14F) dans laquelle le frein à main peut être actionné, et une position d'empêchement de desserrage du frein à main (14L) dans laquelle le desserrage du frein à main est empêché lors de l'utilisation ;
**caractérisé en ce que** :
la barre de verrouillage (14) est orientée parallèlement à l'axe (H-H) du levier de frein à main (4) dans la position d'activation de desserrage du frein à main (14F), et est tournée de manière à ce qu'au moins une partie de la barre de verrouillage (14) s'étende directement sous le levier de frein à main (4) en position d'empêchement de desserrage du frein à main (14L).

2. Dispositif de verrouillage de frein à main (12) selon la revendication 1, comprenant un moteur (16) auquel la barre de verrouillage (14) est reliée au niveau d'une extrémité et qui est actionné pour effectuer un mouvement de rotation de la barre de verrouillage.

3. Dispositif de verrouillage de frein à main (12) selon la revendication 2, dans lequel le moteur (16) est un moteur pas à pas.

4. Dispositif de verrouillage de frein à main (12) selon l'une quelconque des revendications 1 à 3, comprenant un boîtier de barre de verrouillage (18), dans lequel la barre de verrouillage (14) tourne dans la position d'empêchement de desserrage du frein à main (14L).

5. Dispositif de verrouillage de frein à main (12) selon la revendication 4, dans lequel le boîtier de barre de verrouillage (18) comprend une paroi terminale (22).

6. Dispositif de verrouillage de frein à main (12) selon la revendication 4 ou 5, dans lequel le boîtier de barre de verrouillage (18) comprend une détente (24).

7. Véhicule comprenant un frein à main comportant un levier de frein à main (4), et un dispositif de verrouillage de frein à main (12) selon l'une quelconque des revendications 1 à 6, se trouvant sous le levier de frein à main dans la position d'empêchement de desserrage du frein à main (14L).

8. Véhicule selon la revendication 7, dans lequel le véhicule comprend en outre un système de verrouillage central, et le dispositif de verrouillage du frein à main (12) fait partie du système de verrouillage central du véhicule.

9. Véhicule selon la revendication 8, dans lequel le dispositif de verrouillage de frein à main (12) est actionné lorsque les portes du véhicule sont verrouillées ou déverrouillées centralement.

10. Véhicule selon la revendication 7, dans lequel le dispositif de verrouillage de frein à main (12) est actionné pour se déplacer vers la position d'empêchement de desserrage du frein à main (14L) lorsque le levier de frein à main (4) est levé dans la position « actionné par le frein » et le moteur du véhicule étant arrêté.

11. Véhicule selon l'une quelconque des revendications 7 à 10, dans lequel la barre de verrouillage (14) est adjacente à un côté du levier de frein à main (4), et est tournée entre la position d'empêchement de desserrage du frein à main (14L) et la position d'activation de desserrage du frein à main (14F) lors de l'utilisation.

12. Véhicule selon l'une quelconque des revendications 7 à 11, dans lequel le dispositif de verrouillage de frein à main (12) comprend en outre un support de barre de verrouillage (18) étant adjacente au levier de frein à main (4), du côté opposé de l'axe de levier (H-H) à la barre de verrouillage (14F), et dans lequel l'extrémité distale de la barre de verrouillage (14) est fixée à l'intérieur du support de barre de verrouillage (18) lorsque la barre de verrouillage se trouve dans la position d'empêchement de desserrage du frein à main (14L).

13. Procédé d'activation ou d'empêchement du fonctionnement d'un frein à main de véhicule, le procédé comprenant les étapes :
a) de fourniture d'un dispositif de verrouillage (12) selon l'une quelconque des revendications 1 à 6 se trouvant sous le levier de frein à main (4) lors de l'utilisation ; et
b) de rotation de la barre de verrouillage (14) du dispositif de verrouillage entre une position d'empêchement de desserrage du frein à main (14L) et une position d'activation de desserrage du frein à main (14F), afin d'empêcher ou d'activer le desserrage du frein à main ;
**caractérisé en ce que** :
la barre de verrouillage (14) est orientée parallèlement à l'axe (H-H) du levier de frein à main (4) dans la position d'activation de desserrage du frein à main (14F), et est tournée de manière à ce qu'au moins une partie de la barre de verrouillage (14) s'étende directement sous le levier de frein à main (4) en position d'empêchement de desserrage du frein à main (14L).

14. Procédé selon la revendication 13, dans lequel le véhicule comprend en outre un système de verrouillage central, et le dispositif de verrouillage du frein à main (12) fait partie du système de verrouillage central du véhicule.
